# EUROPÄISCHE PATENTANMELDUNG

(11) **EP 2 182 596 A1**
(43) Veröffentlichungstag der Anmeldung: **05.05.2010**
(21) Anmeldenummer: 09012906.5
(22) Anmeldetag: 13.10.2009
(51) Int. Cl.: H01S 3/00, G02B 27/10, F41H 13/00

(54) **Taktischer Strahler für gerichtete Energie**

(30) Priorität: 31.10.2008 DE 102008054263
(71) Anmelder: LFK-Lenkflugkörpersysteme GmbH, 86529 Schrobenhausen (DE)
(72) Erfinder: Geideck, Franz, 86561 Aresing (DE); Nissl, Norbert, 86571 Langenmosen (DE); Protz, Rudolf, Dr., 85635 Höhenkirchen-Siegertsbrunn (DE); Zoz, Jürgen, Dr., 86316 Friedberg (DE)

(57) **Zusammenfassung**

Ein taktischer Strahler für gerichtete Energie mit zumindest zwei Erzeugern (21, 22, 23, 24, 25, 26, 27) hochenergetischer gerichteter Strahlen (A, B, C, D, E, F, G); zumindest einer Strahlenkombinationseinrichtung (1), die die von den Erzeugern (21, 22, 23, 24, 25, 26, 27) ausgesandten hochenergetischen gerichteten Strahlen (A, B, C, D, E, F, G) zu einem kombinierten Hochenergiestrahl (H) zusammenführt; und einer Fokussiereinrichtung (4) für den kombinierten Hochenergiestrahl (H).

## Beschreibung

### TECHNISCHES GEBIET

Die vorliegende Erfindung betrifft einen taktischen Strahler für gerichtete Energie. Derartige taktische Strahler werden auch als Energiewaffen bezeichnet und können beispielsweise als Laserwaffe ausgebildet sein.

### STAND DER TECHNIK

Ein Einsatzbereich für Laserwaffen wird in der Abwehr von Flugkörperwaffen gesehen, wobei mittels eines gebündelten Laserstrahls auf größere Entfernung (bis zu einigen hundert Kilometern) eine thermische Einwirkung auf die Außenhaut des Flugkörpers ausgeübt wird, durch welche der Flugkörper in seinen aerodynamischen Eigenschaften destabilisiert wird. Ein Beispiel hierfür ist das fliegende Laserwaffensystem Boeing YAL-1 der US Airforce.

Ein weiteres denkbares Anwendungsfeld derartiger Hochenergie-Strahlenwaffen ist der Gefechtsfeldeinsatz über eine Entfernung von einigen hundert Metern bis einigen Kilometern. Dabei kann mittels des hochenergetischen Strahl eine thermische Einwirkung auf Waffen oder Munition ausgeübt werden, durch welche diese kampfunfähig gemacht werden.

In jedem Fall ist es jedoch erforderlich, einen taktischen Strahler für gerichtete Energie zur Verfügung zu stellen, der in der Lage ist, eine sehr hohe Strahlung derart abzugeben, dass die Strahlung beim Eintreffen auf das Zielobjekt noch ausreichend hoch ist, um dort den gewünschten thermischen Effekt zu bewirken.

Zur erfolgreichen Bekämpfung von Mörsergranaten und ähnlichen Zielen mit einer Hochenergie-Laserwaffe muss diese einen Brennfleck mit einer Intensität von größer 10 kW/cm² im Entfernungsbereich von ca. ein bis drei Kilometern auf dem Ziel erzeugen können. Zur Erfüllung dieser Anforderungen wird in der Laserwaffe eine Laserquelle mit einer Leistung von größer als 100 kW benötigt.

Die Entwicklung von Hochenergie-Strahlern, zum Beispiel Hochenergie-Lasern, die für derartige Anwendungsfälle geeignet sind, ist zeit- und kostenaufwendig und beinhaltet nicht unerhebliche Realisierungsrisiken.

Für Industrieanwendungen, zum Beispiel für das Laserschweißen, stehen bereits Laser zur Verfügung, die eine Leistung von einigen kW und nahezu beugungsbegrenzte Strahlqualität (Beugungsmaßzahl m² < 1,1) aufweisen. Diese Leistung, die zwar noch geringfügig steigerbar erscheint, reicht jedoch bei Weitem nicht aus, um die Anforderungen eines taktischen Strahlers zu erfüllen, der auf mehrere hundert Meter oder sogar mehrere Kilometer Entfernung eine wirksame Energieeinwirkung auf ein Objekt ausüben kann.

### DARSTELLUNG DER ERFINDUNG

Aufgabe der vorliegenden Erfindung ist es, einen taktischen Strahler für gerichtete Energie anzugeben, der zu überschaubaren Kosten eine wirksame Energieeinwirkung auf ein Objekt aus einer Entfernung von mehreren hundert Metern bis hin zu einigen Kilometern ermöglicht.

Diese Aufgabe wird durch den im Patentanspruch 1 angegebenen taktischen Strahler gelöst.

Der erfindungsgemäße taktische Strahler für gerichtete Energie ist versehen mit zumindest zwei Erzeugern hochenergetischer gerichteter Strahlen; zumindest einer Strahlenkombinationseinrichtung, die die von den Erzeugern ausgesandten hochenergetischen gerichteten Strahlen zu einem kombinierten Hochenergiestrahl zusammenführt; und einer Fokussiereinrichtung für den kombinierten Hochenergiestrahl.

### VORTEILE

Diese erfindungsgemäße Koppelung der hochenergetischen gerichteten Strahlen aus zumindest zwei Strahlenerzeugern zu einem kombinierten Hochenergiestrahl ermöglicht es, bereits mittels industriell verfügbarer Erzeuger hochenergetischer Strahlen einen kombinierten Hochenergiestrahl zu erzeugen, der auch über eine größere Entfernung eine nicht unerhebliche thermische Wirkung auf ein Zielobjekt ausüben kann.

Vorzugsweise weisen die Erzeuger hochenergetischer gerichteter Strahlen Laserquellen auf. Besonders geeignet sind dabei Laserstrahlen einer Wellenlänge von etwa 1 µm.

Vorzugsweise ist die jeweilige Laserquelle von einem Festkörperlaser gebildet. Derartige Festkörperlaser stehen bereits als Industrielaser für die Materialbearbeitung zur Verfügung. Die Leistung dieser bereits am Markt verfügbaren Industrielaser ist zu überschaubaren Kosten steigerbar, so dass derartige leistungsgesteigerte Laserquellen im erfindungsgemäßen taktischen Strahler für gerichtete Energie in bevorzugter Weise zum Einsatz gelangen können.

Vorzugsweise ist die jeweilige Laserquelle von einem Faserlaser gebildet. Faserlaser besitzen den Vorteil, dass der Laserstrahl in einem lichtleitenden Körper eingefangen ist und dadurch auf einfache Weise zu einem bestimmten Ort und in eine bestimmte Richtung lenkbar ist, was die Ausgestaltung der Strahlenkombinationseinrichtung sehr vereinfacht.

Weiter vorzugsweise ist die Laserquelle eine Single-Mode-Laserquelle und erzeugt Laserstrahlung nur eines Schwingungsmodes.

Vorzugsweise weist die Strahlenkombinationseinrichtung eine Strahlenkombinationsoptik auf, wobei die von den Erzeugern ausgehenden hochenergetischen gerichteten Strahlen von der Strahlenkombinationsoptik zueinander ausgerichtet und auf die Fokussiereinrichtung gerichtet sind. In der Strahlenkombinationsoptik werden die einzelnen hochenergetischen gerichteten Strahlen dabei im Wesentlichen parallel zueinander oder unter einem geringfügigen Neigungswinkel relativ zueinander derart ausgerichtet, dass sie gemeinsam auf die Fokussiereinrichtung treffen und von dieser zu einem einzigen Hochenergiestrahl gebündelt werden.

Vorzugsweise bildet die Strahlenkombinationsoptik eine Kollimationsoptik, die die einzelnen hochenergetischen gerichteten Strahlen zu einem Strahlenbündel aus parallelen Strahlen kombiniert, das den kombinierten Hochenergiestrahl bildet.

Die Kollimationsoptik weist dazu in einer bevorzugten Ausgestaltung eine Mehrzahl von Kollimationsspiegeln, vorzugsweise Parabolspiegeln, auf. Eine derartige Kollimationsoptik kann beispielsweise aus einer der Anzahl der Strahlerzeuger entsprechenden Anzahl von Kollimationsspiegeln bestehen, wobei jeder Kollimationsspiegel, der beispielsweise als Off-Axis-Parabolspiegel ausgebildet ist, einen der vom jeweiligen Erzeuger austretenden hochenergetischen gerichteten und leicht divergenten Energiestrahlen aufnimmt und in einen parallelen Strahl wandelt. Die Anordnung der Kollimationsspiegel ist dabei derart, dass die von den einzelnen Kollimationsspiegeln austretenden parallelen Strahlen in ihrer Gemeinsamkeit ein Strahlenbündel aus parallelen Strahlen darstellen, das den kombinierten Hochenergiestrahl bildet.

Die Fokussiereinrichtung ist vorteilhafterweise so ausgestaltet, dass der kombinierten Hochenergiestrahl mittels der Fokussiereinrichtung in einen Brennpunkt fokussierbar ist.

Dazu weist die Fokussiereinrichtung bevorzugt ein Spiegelteleskop auf.

Um in der Strahlenkombinationseinrichtung auftretende Verlustwärme, hervorgerufen durch die hochenergetische Strahlung, abführen zu können, ist die Strahlenkombinationseinrichtung mit zumindest einer Kühlvorrichtung versehen.

Ebenso kann auch die Fokussiereinrichtung zumindest eine Kühlvorrichtung aufweisen, um die in der Fokussiereinrichtung entstehende Verlustwärme abzuführen.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNG

Es zeigt:

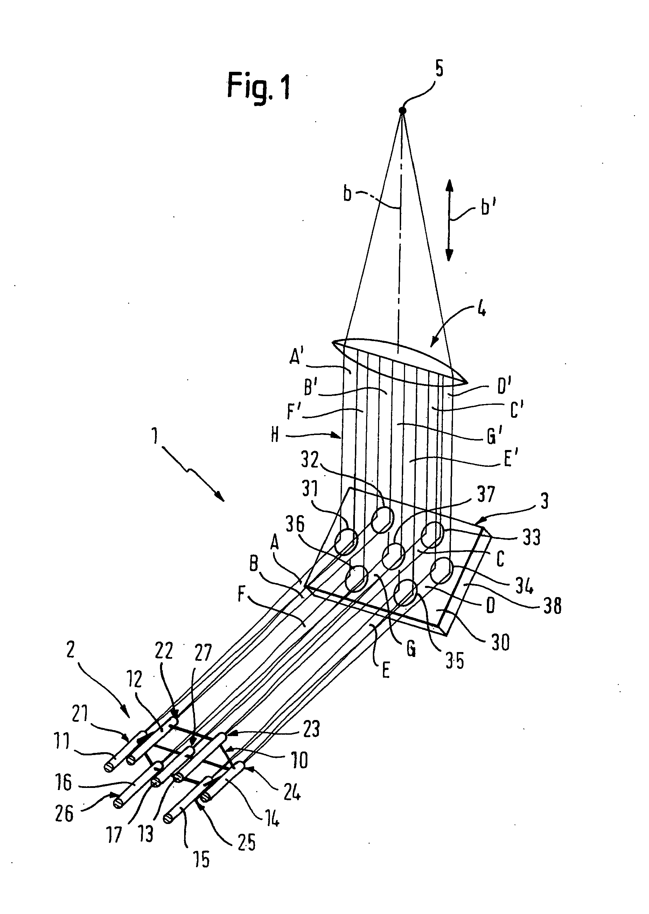

- Fig. 1: eine schematische Darstellung des Strahlenverlaufs in einem erfindungsgemäßen taktischen Strahler.

### DARSTELLUNG VON BEVORZUGTEN AUSFÜHRUNGSBEISPIELEN

In Fig. 1 ist in schematischer Darstellung der Strahlenverlauf in einem erfindungsgemäßen taktischen Strahler wiedergegeben. In einer Strahlenkombinationseinrichtung 1 sind in einer nur schematisch dargestellten mechanischen Halterung 10 eine Mehrzahl von Lichtleitern 11, 12, 13, 14, 15, 16, 17 hochgenau in ihrer Positionierung und ihrem relativen Winkel zueinander angeordnet und bilden mit ihrer jeweiligen Lichtaustrittsfläche eine Strahlenquellenanordnung 2. Zur präzisen Justierung der Lichtleiter sind in dem Fachmann bekannter Weise Stellelemente vorgesehen, mit denen die Lage und die Winkelpositionierung des jeweiligen Lichtleiters einstellbar ist.

Im gezeigten Beispiel sind sieben Lichtleiter vorgesehen, von denen sechs Lichtleiter 11, 12, 13, 14, 15, 16 in hexagonaler Weise (in den Ecken eines gedachten Sechsecks) angeordnet sind und wobei ein siebter Lichtleiter 17 im Zentrum der hexagonalen Anordnung vorgesehen ist. Die Lichtleiter 11, 12, 13, 14, 15, 16, 17 sind derart in der mechanischen Halterung 10 angebracht, dass sie in unmittelbarer Nachbarschaft ihrer jeweiligen Lichtaustrittsfläche in der mechanischen Halterung 10 fixiert sind. Vorzugsweise sind die einzelnen Lichtleiter 11, 12, 13, 14, 15, 16, 17 als einzelne Single-Mode-Fasem ausgebildet.

Im gezeigten Beispiel sind die einzelnen Lichtleiter 11, 12, 13, 14, 15, 16, 17 jeweils Teil eines Faserlasers. Jeder dieser Faserlaser bildet einen Erzeuger 21, 22, 23, 24, 25, 26, 27 für hochenergetische gerichtete Laserstrahlen. Anstelle der Verwendung von Faserlasern können jedoch auch separate Lasermodule als Erzeuger der hochenergetischen gerichteten Strahlen vorgesehen sein, deren Strahlung dann jeweils in einen zugeordneten Lichtleiter eingekoppelt wird.

Die jeweiligen Endstücke der Lichtleiter 11, 12, 13, 14, 15, 16, 17 sind derart in der der mechanischen Halterung 10 fixiert, dass der aus der jeweiligen Lichtaustrittsöffnung austretende leicht divergente Laserstrahl A, B, C, D, E, F, G auf eine im Abstand zur mechanischen Halterung 10 vorgesehene Strahlenkombinationsoptik 3 auftrifft. Die aus dem jeweiligen Lichtleiter 11, 12, 13, 14, 15, 16, 17 austretenden leicht divergenten Laserstrahlen A, B, C, D, E, F, G sind so zueinander ausgerichtet, dass ihre jeweiligen Achsstrahlen parallel zueinander verlaufen.

Die Strahlenkombinationsoptik 3 besteht aus einer mechanischen Halterung 30, auf der eine der Anzahl der Lichtleiter 11, 12, 13, 14, 15, 16, 17 entsprechende Anzahl von Kollimationsspiegeln 31, 32, 33, 34, 35, 36, 37 angebracht ist. Die Kollimationsspiegel sind analog zu den Lichtleitern ebenfalls in hexagonaler Weise mit einem zentralen Mittelspiegel angeordnet. Die mechanische Halterung 30 der Strahlenkombinationsoptik 3 ist dabei relativ zur mechanischen Halterung 10 so ausgerichtet, dass auf jeden der Kollimationsspiegel 31, 32, 33, 34, 35, 36, 37 einer der von den Lichtleitern 11, 12, 13, 14, 15, 16, 17 ausgehenden divergierenden Strahlen A, B, C, D, E, F, G im Wesentlichen vollständig auftrifft und vom zugeordneten Kollimationsspiegel 31, 32, 33, 34, 35, 36, 37 in einen in sich parallelen Laserstrahl A', B', C', D', E', F', G' gewandelt und in seiner Ausbreitungsrichtung umgelenkt wird.

Die umgelenkten parallelen Strahlen bilden gemeinsam ein Strahlenbündel aus parallelen Strahlen, welches wiederum einen Hochenergiestrahl H bildet.

Das Strahlenbündel der von den Kollimationsspiegeln 31, 32, 33, 34, 35, 36, 37 umgelenkten parallelen Strahlen A', B', C', D', E', F', G' trifft auf eine Fokussiereinrichtung 4, die im Beispiel der Fig. 1 als Sammellinse symbolhaft dargestellt ist. In der Fokussiereinrichtung 4 wird der vom Strahlenbündel gebildete Hochenergiestrahl H in einen Brennpunkt 5 fokussiert. Durch entsprechende Ausgestaltung der Fokussiereinrichtung 4 kann die Brennweite b der Fokussiereinrichtung 4 in dem Fachmann bekannter Weise in Richtung des Doppelpfeils b' verändert werden. Das bedeutet, dass der Brennpunkt 5, in welchem die gesamte Energie der Strahlerzeuger 21, 22, 23, 24, 25, 26, 27 zusammengeführt wird, in seinem Abstand zur Fokussiereinrichtung entsprechend den Einsatzanforderungen verstellt werden kann.

Die Kollimationsspiegel 31 sind auf ihrer Rückseite im Bereich der mechanischen Halterung 30 mit einer Kühleinrichtung 38 versehen, die Teil einer Kühlvorrichtung für die Strahlenkombinationsoptik 3 ist und die die durch die Laserstrahlen in den Kollimationsspiegeln 31 erzeugte Wärme abführt.

Auch die mechanische Halterung 10 kann mit einer (nicht gezeigten) Kühleinrichtung versehen sein.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Strahlenkombinationseinrichtung
- 2: Strahlenquellenanordnung
- 3: Strahlenkombinationsoptik
- 4: Fokussiereinrichtung
- 5: Brennpunkt
- 10: Halterung
- 11: Lichtleiter
- 12: Lichtleiter
- 13: Lichtleiter
- 14: Lichtleiter
- 15: Lichtleiter
- 16: Lichtleiter
- 17: Lichtleiter
- 21: Erzeuger
- 22: Erzeuger
- 23: Erzeuger
- 24: Erzeuger
- 25: Erzeuger
- 26: Erzeuger
- 27: Erzeuger
- 30: Halterung
- 31: Kollimationsspiegel
- 32: Kollimationsspiegel
- 33: Kollimationsspiegel
- 34: Kollimationsspiegel
- 35: Kollimationsspiegel
- 36: Kollimationsspiegel
- 37: Kollimationsspiegel
- 38: Kühlelement
- b: Brennweite
- b': Doppelpfeil
- A: divergierender Laserstrahl
- A': paralleler Laserstrahl
- B: divergierender Laserstrahl
- B': paralleler Laserstrahl
- C: divergierender Laserstrahl
- C': paralleler Laserstrahl
- D: divergierender Laserstrahl
- D': paralleler Laserstrahl
- E: divergierender Laserstrahl
- E': paralleler Laserstrahl
- F: divergierender Laserstrahl
- F': paralleler Laserstrahl
- G: divergierender Laserstrahl
- G': paralleler Laserstrahl
- H: Hochenergiestrahl
- L: divergierender Laserstrahl
- L': paralleler Laserstrahl

## Patentansprüche

1. Taktischer Strahler für gerichtete Energie mit
- zumindest zwei Erzeugern (21, 22, 23, 24, 25, 26, 27) hochenergetischer gerichteter Strahlen (A, B, C, D, E, F, G);
- zumindest einer Strahlenkombinationseinrichtung (1), die die von den Erzeugern (21, 22, 23, 24, 25, 26, 27) ausgesandten hochenergetischen gerichteten Strahlen (A, B, C, D, E, F, G) zu einem kombinierten Hochenergiestrahl (H) zusammenführt; und
- einer Fokussiereinrichtung (4) für den kombinierten Hochenergiestrahl (H).

2. Taktischer Strahler nach Anspruch 1,
**dadurch gekennzeichnet,**
**dass** die Erzeuger (21, 22, 23, 24, 25, 26, 27) hochenergetischer gerichteter Strahlen (A, B, C, D, E, F, G) Laserquellen aufweisen.

3. Taktischer Strahler nach Anspruch 2,
**dadurch gekennzeichnet,**
**dass** die jeweilige Laserquelle von einem Festkörperlaser gebildet ist.

4. Taktischer Strahler nach Anspruch 2 oder 3,
**dadurch gekennzeichnet,**
**dass** die jeweilige Laserquelle von einem Faserlaser gebildet ist.

5. Taktischer Strahler nach einem der Ansprüche 2 bis 4,
**dadurch gekennzeichnet,**
**dass** die Laserquelle eine Single-Mode-Laserquelle ist und Laserstrahlung nur eines Schwingungsmodes erzeugt.

6. Taktischer Strahler nach einem der vorhergehenden Ansprüche,
**dadurch gekennzeichnet,**
**dass** die Strahlenkombinationseinrichtung (1) eine Strahlenkombinationsoptik (3) aufweist, wobei die von den Erzeugern (21, 22, 23, 24, 25, 26, 27) ausgehenden hochenergetischen gerichteten Strahlen (A, B, C, D, E, F, G) von der Strahlenkombinationsoptik (3) zueinander ausgerichtet und auf die Fokussiereinrichtung (4) gerichtet sind.

7. Taktischer Strahler nach Anspruch 6,
**dadurch gekennzeichnet,**
**dass** die Strahlenkombinationsoptik (3) eine Kollimationsoptik bildet, die die einzelnen hochenergetischen gerichteten Strahlen (A, B, C, D, E, F, G) zu einem Strahlenbündel aus parallelen Strahlen (A', B', C', D', E', F', G') kombiniert, das den kombinierten Hochenergiestrahl (H) bildet.

8. Taktischer Strahler nach Anspruch 7,
**dadurch gekennzeichnet,**
**dass** die Kollimationsoptik eine Mehrzahl von Kollimationsspiegeln (31, 32, 33, 34, 35, 36, 37), vorzugsweise Parabolspiegeln, aufweist.

9. Taktischer Strahler nach einem der vorhergehenden Ansprüche,
**dadurch gekennzeichnet,**
**dass** der kombinierte Hochenergiestrahl (H) mittels der Fokussiereinrichtung (4) in einen Brennpunkt (5) fokussierbar ist.

10. Taktischer Strahler nach Anspruch 9,
**dadurch gekennzeichnet,**
**dass** die Fokussiereinrichtung (4) ein Spiegelteleskop aufweist.

11. Taktischer Strahler nach einem der vorhergehenden Ansprüche,
**dadurch gekennzeichnet,**
**dass** die Strahlenkombinationseinrichtung (1) zumindest eine Kühlvorrichtung aufweist.

12. Taktischer Strahler nach einem der vorhergehenden Ansprüche,
**dadurch gekennzeichnet,**
**dass** die Fokussiereinrichtung (4) zumindest eine Kühlvorrichtung aufweist.
